(19) Europäisches Patentamt
European Patent Office
Office européen des brevets

(11) **EP 1 754 687 A2**

(12) **EUROPÄISCHE PATENTANMELDUNG**

(43) Veröffentlichungstag:
**21.02.2007   Patentblatt 2007/08**

(51) Int Cl.:
*C02F 3/28* (2006.01)

(21) Anmeldenummer: **06011053.3**

(22) Anmeldetag: **30.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **01.06.2005   DE 102005025562**

(71) Anmelder: **Syntana GmbH**
**45479 Mühlheim an der Ruhr (DE)**

(72) Erfinder: **Maleika, Frank Dr.**
**45665 Recklinghausen (DE)**

(74) Vertreter: **Sroka, Peter-Christian**
**Patentanwalt,**
**Dominikanerstrasse 37**
**40545 Düsseldorf (DE)**

(54) **Verfahren zur Dentrifikation von Belebtschlamm sowie Verwendung von Rohglycerin für die Denitrifikation in einer Abwasser-Kläranlage**

(57)   Verfahren zur Denitrifikation von Belebtschlamm durch Zugabe einer extemen Kohtenstoffiquelle in Form von Rohglycerin mit einem Glyceringehalt von ca. 80 % und einem Methanolgehalt von < 0,5 % sowie Verwendung eines solchen Rohglycerins zur Denitrifikation von Belebtschlamm.

**EP 1 754 687 A2**

**Beschreibung**

Die Erfindung betrifft die Denitrifikation von Belebtschlamm unter Verwendung einer externen Kohlenstoffquelle.

Es ist bekannt, z.B. Essigsäure oder Methanol als sogenannte externe Kohlenstoffquellen einzusetzen, um den Prozeß der Denitrifikation und biologischen Phosphoreleminierung (Bio-P) in einer Kläranlage zu unterstützen. In der US 2005/0061737 A1 (Absatz [0056]) ist für diesen Zweck als externe Kohlenstoffquelle unter anderem auch Glycerin erwähnt, worunter allgemein Reinglycerin verstanden wird.

Die Denitrifikation unterliegt folgender Teilgleichung:

$$4NO_3^- + 4H^+ + 5C \rightarrow 2N_2 + 2H_2O + 5CO_2$$

$$260\,g + 4\,g + 60\,g \rightarrow 34\,g + 36\,g + 220\,g.$$

Damit werden
für 260 g $NO_3$ werden 60 g C(TOC) benötigt
bzw. 1 kg $NO_3$ benötigt 230,8 g C(TOC)

Die o.g. externen Kohlenstoffquellen haben folgende Nachteile:

### 1.) Methanol

ist:

-    Gefahrstoff nach der Gefahrstoffverordnung,
-    explosiv,
-    giftig,
-    für den Einsatz von Methanol muss in der Regel ab einer gewissen Menge eine imissionsschutzrechtliche Genehmigung eingeholt werden.
-    Methanol hat eine recht hohe Adaptionszeit, d. h. die Bakterien brauchen sehr lange um eine für Methanol geeignete Biozönose aufzubauen (manchmal bis zu 4 Wochen). Somit eignet sich Methanol nicht für den kurzfristigen Einsatz beispielsweise bei Kohlenstoffmangel in der Kläranlage am Wochenende.

### 2.) Essigsäure

-    Der Einsatz von Essigsäure führt kostenmäßig zu einem relativ hohen Aufwand,
-    in der Regel wird Essigsäure als 60%ige Ware eingesetzt; der Umgang mit einer derart konzentricrten Säure ist vom Gesichtspunkt des Arbeitsschutzes als kritisch anzusehen.
-    Essigsäure ist sehr gcruchsintensiv.
-    der Vorteil von Essigsäure liegt in der Tatsache begründet, dass Essigsäure eine sehr kurzc Adaptionszeit aufweist.

### 3.) Glycerin

-    Die technische Darstellung von Glycerin, d.h. Reinglycerin, erfordert einen sehr hohen verfahrenstechnischen Aufwand und führt damit auch kostenmäßig zu einem relativ hohen Aufwand,
-    reines Glycerin hat eine Viskosität von ca. 5000 mPas und kann damit mit dem üblicher Weise auf Kläranlagen vorhandenen Dosiereinrichtungen nicht gepumpt werden,
-    reines Glycerin benötigt des weiteren eine gewisse Mischzeit mit dem Abwasser mit der Folge, dass das Glycerin während dieser Mischzeit dem eigentlichen Klärprozeß nicht zur Verfügung steht; die sogenannte Denitrifikationszone in einer Kläranlage hat maximal eine mittlere Verweilzeit von einer Stunde, bei vielen Kläranlange sogar nur eine Verweilzeit von 15 Minuten.

Der Erfindung liegt die Aufgabe zu Grunde ein Verfahren zu schaffen, bei dem die sich durch die Verwendung von Methanol, Essigsäure oder reinem Glycerin resultierenden Nachteile vermieden werden.

Diese Aufgabe wird dadurch gelöst, dass man als externe Kohlenstoffquelle in Form von Rohglycerin mit einem Glyceringehalt von ca. 80 % und einem Methanolgehalt von < 0,5 % verwendet. Gemäß einer bevorzugten Ausführungsform wird ein Rohglycerin mit einem Methanolgehalt von vorzugsweise < 0,2 % verwendet.

Das eingesetzte Rohglycerin entstammt einer natürlichen Ressource. Rohglycerin fällt bei der Herstellung von Biodiesel insbesondere aus Rapsöl an. Rapsöle stellen sogenannte Triglyceride dar. Durch eine Umesterungsreaktion mittels Methanol wird hieraus Rapsölmethylester, gemeinhin als Biodiesel bezeichnet, erzeugt, wie es z.B. in DE 103 10 203 A1 beschrieben ist. Bei dieser Umcsterung fällt ebenfalls Rohglycerin in einer Menge von 120 kg Rohglycerin je Tonne Rapsöl an. In der ersten Stufe entsteht ein Rohglycerin mit mindestens 50% Glyceringehalt. Allerdings entbält diese Phase auch 20% Methanol. Dieses Rohglycerin ist noch nicht geeignet, die durch Methanol bedingten Nachteile auszugleichen. In der zweiten Stufe des verfahrenstechnischen Ablaufes entsteht ein Rohglycerin mit ca. 80% Glyceringehalt und 0,2% Methanol. Mit diesem für die Denitrifikation und auch die Bio-Phosphoreliminierung geeigneten sogenannten Rohglycerin werden die o. g. Nachteile vermieden.

Um die Wirksamkeit des Produktes Rohglycerin zu untermauern, wurden sowohl im Labormaßstab wie auch großtechnisch Versuche durchgeführt.

Laborversuch

Es wurde 80%iges Rohglycerin im Vergleich zu einer Zuckerlösung und einer Essigsäure getestet. Die Abbauversuche wurden parallel durchgeführt. Eine Belebtschlammprobe (Ende der Denitrifikation) wurde geteilt, das entsprechende Mittel zudosiert, über den Versuchszeitraum wurde gerührt und im 10-Minuten-Takt der Nitratgehalt analysiert. Die Dosierung des jeweiligen Mittels entspricht ungefähr 1/25.000. Eine Blindprobe wurde ebenfalls durchgeführt. Das Ergebnis lässt sich aus folgendem Diagramm gut ersehen:

**Denitrifikationsversuche (Diagramm 1)**
Vergleich der Abbautätigkeit mit und ohne Zusatz

Es ist gut zu erkennen, dass die Essigsäure und das Rohglycerin nach ca. 60 Minuten zu einem ähnlichen Endergebnis führen. Anfänglich reagiert die Essigsäure etwas schneller; dies ist jedoch in einem praktischen Betrieb eher unerheblich. Interessanterweise war die Zuckerlösung weniger effektiv als Essigsäure und Rohglycerin. Für den Nitratabbau sind Essigsäure und Rohglycerin nahezu gleichwertig.

Vorzugsweise kann dem Rohglycerin Essigsäure bis zu einem Anteil von maximal 50.% zugemischt werden.

Großtechnische Versuche

Das Produkt Rohglycerin wurde im großtechnischen Maßstab eingesetzt. Um auch der biologischen Phosphateliminierung leicht abbaubare Stoffe zuführen zu können und sie damit zu unterstützen, wurde der Dosicrpunkt allerdings auf das letzte Viertel des Bio-P-Beckens vorverlegt.

## Vergleich Stickstoffwerte (Summe aus Ammonium und Nitrat) am Ende der Belebung 2 Diagramm 2)

## Vergleich der ortho-Phosphat-Werte im großtechnischen Maßstab (Diagramm 3)

Wie aus den Diagrammen ersichtlich, lassen sich durch Einsatz von Rohglycerin die Stickstoff- und Phosphorwerte deutlich reduzieren. Aufgetragen ist hier der Vergleich zu einer Kurve ohne den Zusatz einer externen Kohlenstoffquelle.

Der Phosphorgehalt im Ablauf der Kläranlage konnte durch den Einsatz von Rohglycerin im Bio-P-Becken auf sehr niedrigem Niveau gehalten werden. Auch die Stickstoffwerte konnten unter den gesetzlichen Vorlagen gehalten werden.

**EP 1 754 687 A2**

**Patentansprüche**

1. Verfahren zur Denitrifikation von Belebtschlamm durch Zugabe einer externen Kohlenstoffquelle in Form von Rohglycerin mit einem Glyceringehalt von ca. 80 % und einem Methanolgehalt von < 0,5

2. Verfahren nach Anspruch 1, **dadurch gekennzeichnet, daß** man Rohglycerin mit einem Methanolgehalt von < 0,2 % verwendet.

3. Verfahren nach einem der Ansprüche 1 oder 2, **dadurch gekennzeichnet, daß** man Rohglycerin verwendet, das bei der Biodieselproduktion anfällt.

4. Verfahren nach Anspruch 3, **dadurch gekennzeichnet, daß** man Rohglycerin verwendet, das bei der Biodieselproduktion aus Rapsöl anfällt.

5. Verfahren nach einem der Ansprüche 1 bis 4, **dadurch gekennzeichnet, daß** man zur gleichzeitigen Reduzierung des Phosphorgehaltes das Rohglycerin dem Kläranlagebecken bereits während des biologischen Phosphoreliminierungsprozesses zusetzt.

6. Verfahren nach Anspruch 5, **dadurch gekennzeichnet, daß** man das Rohglycerin während des letzten Viertels des biologischen Phosphoreliminierungsprozesses zusetzt.

7. Verfahren nach einem der Ansprüche 1 bis 5, **dadurch gekennzeichnet, daß** man ein Gemisch von Rohglycerin und Essigsäure mit einem maximalen Essigsäureanteil von 50.% verwendet.

8. Verwendung von Rohglycerin mit einem Glyceringebalt von ca. 80 % und einem. Methanolgehalt von 0,5 % für die Denitrifikation in einer Abwasser-Kläranlage.

**5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050061737 A1
- DE 10310203 A1